# EUROPÄISCHE PATENTANMELDUNG

(11) **EP 0 914 771 A2**
(43) Veröffentlichungstag der Anmeldung: **12.05.1999**
(21) Anmeldenummer: 98118879.0
(22) Anmeldetag: 06.10.1998
(51) Int. Cl.: A21D 6/00, A21D 8/02, A21C 13/02, A21C 9/00

(54) **Verfahren und Aufbereitungsstrasse zur Herstellung gegärter und gefrosteter Teiglinge**

(30) Priorität: 05.11.1997 DE 19748850
(71) Anmelder: Koma Investments and Finance b.v., 6045 JE Roermond (NL)
(72) Erfinder: Houx, Petrus, Matheus, Maria, 6075 Herkenbosch (NL); Augustus, Johannes, Simon, Wilhelmus, 6212 AL Maastricht (NL); Wehrens, Peter, Willen Marie, 6151 JA Munstergeleen (NL)
(74) Vertreter: Strych, Werner Maximilian Josef, Dr.

(57) **Zusammenfassung**

Es wird ein Verfahren und eine Aufbereitungsstraße zur Herstellung gegärter und gefrosteter Teiglinge beansprucht, in der sogenannte 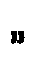 grüne" Teiglinge in einem Gärraum (1) gegärt und anschließend in einem Entfeuchtungsraum (2) entfeuchtet werden, wobei den Teiglingen insbesondere die während des Gärprozesses im Bereich zwischen Krume und Kruste aufgenommene Feuchtigkeit entzogen wird, um ein späteres Abplatzen der Kruste von der Krume beim fertig gebackenen Teigling weitestgehend zu vermeiden. Danach werden die Teiglinge in einem Schockfrostraum (3) schockgefrostet und anschließend in einem Tiefkühlraum gelagert, von dem sie z. B. an Bäckereien ausgeliefert werden, welche die Teiglinge in eigenen Öfen fertig backen.

## Beschreibung

Die Erfindung betrifft ein Verfahren und eine Aufbereitungsstraße zur Herstellung gegärter und gefrosteter Teiglinge, in welche sogenannte 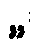 grüne" Teiglinge auf Stikkenwägen eingeführt und welcher gegärte und gefrostete Teiglinge entnommen werden.

Bei den 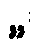 grünen" Teiglingen kann es sich um turierte, d. h. in einer Vielzahl von Lagen geschichtete Teiglinge handeln, wobei die Anzahl der Schichten variiert. Die 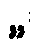 grünen" Teiglinge können aber auch nicht turierte Teiglinge, wie z.B. Brötchen oder Baguette sein. Die Teiglinge liegen i.d.R. auf mehreren übereinander angeordneten Blechen in den Stikkenwägen, welche zunächst in bekannter Weise in einen Gärraum gefahren werden, in dem ein Gärprozeß unter festgelegten Umgebungsbedingungen abläuft. Nach dem Gären ruhen die Teiglinge kurze Zeit in der Backstube, wobei eine unkontrollierte Entfeuchtung stattfindet, und werden dann schockgefrostet und anschließend in einem Tiefkühlraum gelagert. Von dort werden sie z. B. an Bäckereien ausgeliefert, welche die Teiglinge in eigenen Öfen fertigbacken.

Bekanntlich weisen derartig hergestellte Produkte, wie z. B. Croissants, nach dem Fertigbacken eine äußerst brüchige Kruste auf, die insbesondere bei Berührung mit der Hand von dem fertiggebackenen Teigling abplatzt. Es ist einerseits erwünscht, Plunderspeisen, z.B. Croissants, mit einer knusprigen und somit auch leicht brüchigen Kruste herzustellen, die einen gewissen Biß und angenehme Kaueigenschaften aufweist und außerdem einen goldbraunen Farbton hat, der einen Eindruck von Frische und Geschmack vermittelt. Andererseits haben derartige, mit dem o.g. Verfahren hergestellte Speisen aber den Nachteil, daß oftmals große Teile der äußeren Kruste abplatzen, die abgeplatzten Teile herunterfallen und die Kleidung des Konsumenten oder dessen Umgebung übermäßig stark verschmutzen. Darüber hinaus geht ein großer Teil der Speise verloren und kann nicht mehr verzehrt werden.

Es ist daher die Aufgabe der vorliegenden Erfindung, das gattungsgemäße Verfahren und die Vorrichtung zur Herstellung von Plunderspeisen derart weiterzubilden, daß nach dem Fertigbacken der gegärten und gefrosteten Teiglinge das Abplatzen der Kruste von der Krume weitestgehend verhindert wird.

Gelöst wird diese Aufgabe gemäß der Erfindung mittels eines Verfahrens bzw. einer Aufbereitungsstraße gemäß Anspruch 1 bzw. 12. Zweckmäßige Ausgestaltungen der Erfindung ergeben sich aus den Unteransprüchen.

Das Zwischenschalten eines Entfeuchtungsprozesses zwischen dem Gären und Schockfrosten der Teiglinge hat den Vorteil, daß insbesondere die während des Gärprozesses im Bereich zwischen Krume und Kruste vom Teigling aufgenommene Feuchtigkeit, verringert wird und somit ein späteres Abplatzen der Kruste von der Krume beim fertiggebackenen Teigling weitestgehend nicht auftritt.

Ursache für das Abplatzen der Kruste vom fertig gebackenen Teigling ist ein zu hoher Feuchtigkeitsgehalt im Bereich zwischen Kruste und Krume des Teiglings, der während des Gärens im Gärraum entsteht. Beim Schockfrosten bilden sich in diesem Bereich relativ große Eiskristalle, die die Struktur des Teiges verletzen und beim Fertigbacken des Teiglings relativ viel Dampf erzeugen. Beim Fertigbacken kann der entstehende Dampf die Kruste relativ weit von der Krume abheben, wodurch sich zwischen Krume und Kruste Hohlräume ausbilden, die beim Verzehr der Speise von der Hand eingedrückt werden.

Vor dem Schockfrosten ist daher eine Feuchtigkeitsverteilung im Teigling erwünscht, die von außen nach innen, d. h. von der äußeren Kruste in Richtung zur inneren Krume etwa gleichmäßig zunimmt.

Nach dem Entfeuchten sollte die Krume einen Feuchtigkeitsgehalt von 30 bis 60%, und die Kruste einen Feuchtigkeitsgehalt von 18 bis 35%, insbesondere 25 bis 30%, aufweisen.

Die erfindungsgemäße Aufbereitungsstraße umfaßt einen Gärraum, einen Entfeuchtungsraum und einen Schockfrostraum, wobei unmittelbar nach dem Schockfrostraum ein Tiefkühlraum angeordnet sein kann.

Vorzugsweise ist die Temperatur im Entfeuchtungsraum niedriger als im Gärraum. Zur Entfeuchtung der Teiglinge können z.B. Verdampfer als Entfeuchtungseinrichtung dienen, an denen die Luft vorbeigeführt wird, so daß die in der Luft enthaltene Feuchtigkeit kondensiert. Der Luftstrom wird vorzugsweise zirkulierend im Entfeuchtungsraum geführt, kann aber auch auf einer Seite des Entfeuchtungsraumes eingeblasen und auf der anderen Seite abgeführt werden.

Des weiteren kann ein Heizelement in Strömungsrichtung z. B. vor der Entfeuchtungseinrichtung angeordnet sein, um die Feuchtigkeits-Aufnahmefähigkeit der Luft zu erhöhen.

Sowohl die Entfeuchtungseinrichtung als auch das Heizelement sind vorzugsweise an der Decke des Entfeuchtungsraumes, oberhalb der Stikkenwägen, befestigt, um eine optimale Zirkulation und Entfeuchtung der Teiglinge zu erreichen.

Im Entfeuchtungsraum sind als Prozeßparameter die Temperatur, Luftfeuchtigkeit und die Verweildauer der Stikkenwägen regelbar. Die Verweildauer der Stikkenwägen im Entfeuchtungsraum kann z. B. durch die Antriebsgeschwindigkeit eines Stikkenwagenantriebs beeinflußt werden.

Das Transportsystem für die Stikkenwägen besteht z. B. aus einem Spindelantrieb, der Spindelläufer mit schwenkbaren Haken antreibt, welche an den Stikkenwägen angreifen und diese mitnehmen.

Der oben genannte Stikkenwagenantrieb kann sich z. B. über die gesamte Länge der Aufbereitungsstraße erstrecken, wodurch die Stikkenwägen in jedem Raum der Aufbereitungsstraße mit gleicher Geschwindigkeit angetrieben werden. Die Verweildauer der Stikkenwägen mit den Teiglingen bestimmt sich bei lückenlos mit Stikkenwägen besetzter Aufbereitungsstraße allein durch die Länge der einzelnen Räume.

Um am Ende der Aufbereitungsstraße ein optimal aufbereitetes Produkt zu erhalten, ist es daher wichtig, in jedem Raum die Temperatur separat einstellen und insbesondere im Gär- und Entfeuchtungsraum die Luftfeuchtigkeit regeln zu können. Zu diesem Zweck sind jeweils Be- bzw. Entlüftungssysteme vorgesehen, deren Betriebsparameter - z.B. die Strömungsgeschwindigkeit - ebenso wie andere Prozeßparameter zentral steuerbar sind.

Ausführungsformen gemäß der Erfindung sind nachfolgend anhand der Figuren beispielhaft näher erläutert. Es zeigen
- Fig.: 1 eine erfindungsgemäße Aufbereitungsstraße zur Herstellung gegärter und gefrosteter Teiglinge in der Aufsicht,

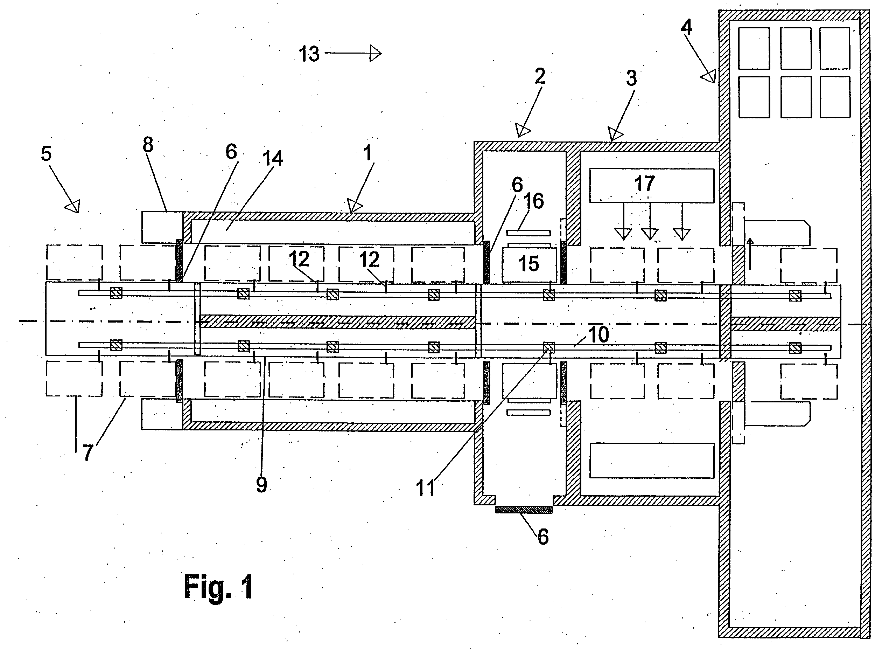

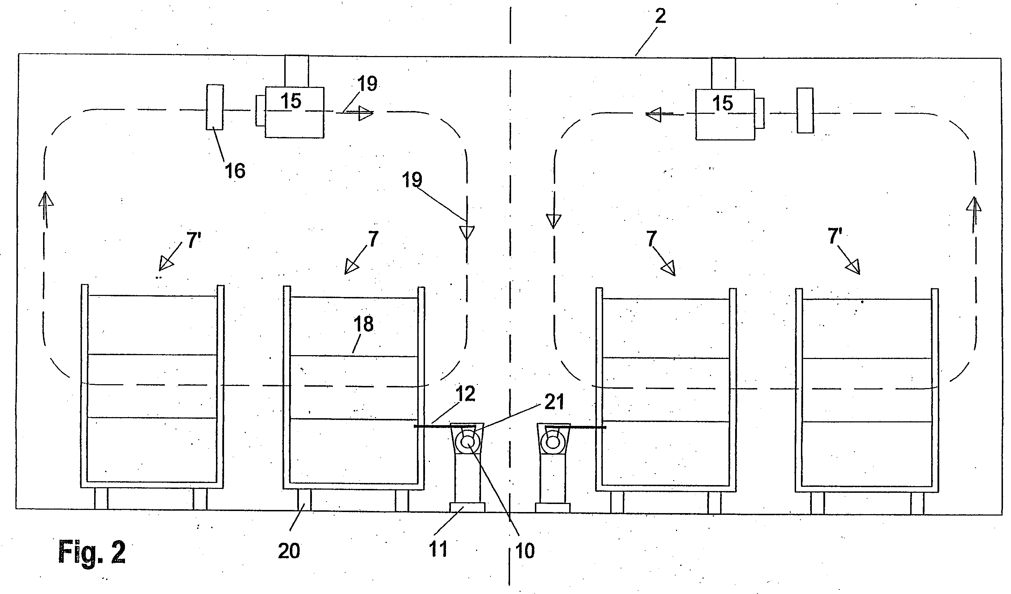

- Fig. 2: den Entfeuchtungsraum der Aufbereitungsstraße in Fig. 1 in Durchlaufrichtung.

Fig. 1 zeigt zunächst eine zweispurige Aufbereitungsstraße zur Herstellung gegärter und gefrosteter Teiglinge, umfassend einen Bereitstellungsbereich 5, einen Gärraum 1, einen Entfeuchtungsraum 2, einen Schockfrostraum 3 und einen Tiefkühlraum 4 mit Stauraum. Die Teiglinge werden auf Stikkenwägen 7 zum Bereitstellungsbereich 5 der Aufbereitungsstraße gebracht, wo sie zwischen einem Führungsteil 8 und einer Leitschiene 9 in Durchlaufrichtung 13 der Aufbereitungsstraße ausgerichtet werden.

Die Stikkenwägen 7 werden von einem Transportsystem automatisch durch die Aufbereitungsstraße befördert. Das Transportsystem umfaßt eine Spindel 10, welche Spindelläufer 21 (siehe Fig. 2) antreibt, an denen sich jeweils ein um etwa 90° in Durchlaufrichtung 13 schwenkbarer Haken 12 befindet, der an den Stikkenwägen 7 angreift. Das Transportsystem wird zyklisch in Durchlaufrichtung 13 vor und zurück angetrieben. Dabei bewegen sich die Spindelläufer 21 jeweils um einen Vorschubzyklus in Durchlaufrichtung 13 vorwärts und ziehen dabei den jeweiligen Stikkenwagen 7 um eine Vorschublänge durch die Aufbereitungsstraße. Anschließend werden die Spindelläufer 21 durch Drehen der Spindel 10 in entgegengesetzter Richtung wieder um eine Vorschublänge zurückbewegt, wobei die Haken 12 bei Berührung von Hindernissen bis zu 90° einschwenken und somit das Zurückbewegen der Spindelläufer 21 nicht behindern. Nach dem Einschwenken in Durchlaufrichtung 13 schwenken die Haken 12 mittels eines Federmechanismus o.dgl. zurück in ihre Transportstellung, also etwa quer zur Durchlaufrichtung 13.

Die Spindel 10 erstreckt sich vom Bereitstellungsbereich 5 der Aufbereitungsstraße bis in den Eingangsbereich des Kühlraums 4 und wird an mehreren Stellen von Halterungen 11 unterstützt. Parallel zur Spindel 10 ist eine Leitschiene 9 angeordnet, an der die Stikkenwägen 7 durch die Aufbereitungsstraße entlanggeführt werden. Die einzelnen Räume der Aufbereitungsstraße sind durch Türen 6 voneinander getrennt.

Die vom Bereitstellungsbereich 5 in den Gärraum 1 eingebrachten 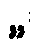 grünen" Teiglinge durchlaufen zunächst einen Gärprozeß bei Temperaturen von ca. 25 bis 30° C und einer relativen Luftfeuchtigkeit von ca. 70 bis 80 %. Der einstellbare Temperaturbereich liegt bei ca. +15° C bis +40° C, während die Luftfeuchtigkeit zwischen ca. 63 % und 99 % geregelt werden kann.

Der Gärraum 1 wird quer zur Durchlaufrichtung 13 von Luft durchströmt, wobei die Luftgeschwindigkeit einstellbar ist. In den Seitenwänden des Gärraumes 1 befinden sich Belüftungskanäle 14 und entsprechende (nicht gezeigte) Belüftungsöffnungen, durch welche die gewünschte Menge Luft bei vorgegebenen Temperatur- und Feuchtigkeitsbedingungen in den Gärraum 1 eingeblasen wird.

Nach Durchlaufen des Gärraumes 1 gelangen die Stikkenwägen 7, einer nach dem anderen, durch eine weitere Tür 6 in den Entfeuchtungsraum 2. Die Temperatur im Entfeuchtungsraum 2 ist üblicherweise etwas niedriger als im Gärraum 1 und liegt vorzugsweise zwischen 5 und 20° C. Auch im Entfeuchtungsraum 2 können Temperatur und Luftfeuchtigkeit in Abhängigkeit von der Art des Teiglings und von der gewünschten Entfeuchtung eingestellt werden.

Als Entfeuchtungseinrichtung dient wenigstens ein Verdampfer 15 mit Gebläse, der in bekannter Weise nach dem Kühlprinzip arbeitet und der angesaugten Luft Feuchtigkeit entzieht, indem die Feuchtigkeit der vorbeiströmenden Luft an der kalten Oberfläche des Verdampfers kondensiert. Die der Luft entzogenen Feuchtigkeit wird über ein Rohrsystem abgeleitet.

Das Gebläse des Verdampfers 15 saugt auf einer Seite feuchte Luft an, entzieht dieser das darin enthaltene Wasser und bläst die trockene Luft auf der anderen Seite wieder aus, wodurch ein vertikal zirkulierender Luftstrom erzeugt wird, der im wesentlichen quer zur Durchgangsrichtung 13 über die auf den Stikkenwägen liegenden Teiglinge streicht und deren Feuchtigkeit aufnimmt.

Die feuchte Luft wird durch dem Verdampfer 15 jeweils vorgeschaltete Heizelemente 16 hindurch angesaugt, die die Luft vor dem Eintritt in den Verdampfer 15 aufheizen, so daß die Feuchtigkeitsaufnahmefähigkeit der Luft gesteigert wird.

Beim Entfeuchten werden die Prozeßparameter, insbesondere Temperatur und Luftfeuchtigkeit, derart eingestellt, daß z.B. die Kruste einer Plunderspeise nach dem Fertigbacken durch Berührung mit der Hand möglichst wenig abplatzt, selbst wenn die Kruste ansonsten gut gebräunt und kross ist.

Nach dem Entfeuchten werden die Stikkenwägen 7 mit den entfeuchteten Teiglingen in den Schockfrostraum 3 befördert. Im Schockfrostraum 3 ist ein Kühlaggregat 17 vorgesehen, welches die zum Schockfrosten erforderliche Kälte erzeugt und einen kalten Luftstrom im wesentlichen in Querrichtung zur Durchgangsrichtung 13 gegen die Teiglinge bläst.

Nach dem Verlassen des Schockfrostraums 3 werden die aufbereiteten Teiglinge in einem Tiefkühlraum gelagert oder z. B. direkt an Bäckereien ausgeliefert, welche die Teiglinge in ihren eigenen Öfen fertig backen.

Fig. 2 zeigt das Innere des Entfeuchtungsraums 2, wobei die Blickrichtung die Durchlaufrichtung 13 ist. Der Entfeuchtungsraum 2 ist gleichzeitig Entfeuchtungsraum für eine erste und eine zweite Aufbereitungsstraße. Die linke und die rechte Hälfte des Entfeuchtungsraums 2 in Fig. 2 enthalten jeweils einen Verdampfer 15 mit Gebläse und ein Heizelement 16, die sich an der Decke des Entfeuchtungsraums 2 befinden. Die Luftansaugöffnungen der Verdampfer 15 sind voneinander weg gerichtet und letztere saugen feuchte Luft durch jeweils vorgeschaltete Heizelemente 16 hindurch an, kondensieren die in der Luft enthaltene Feuchtigkeit und leiten das Kondenswasser über entsprechende Rohrleitungen ab. Auf den einander zugewandten Seiten der Verdampfer 15 wird die trockene Luft ausgeblasen, so daß die beiden trockenen Luftströme aufeinander treffen und nach unten wegströmen. Dadurch entsteht eine Zirkulationsströmung aus zwei Wirbeln, welche für eine gleichmäßige Verteilung der Luft im Entfeuchtungsraum 2 sorgen.

Der trockene Luftstrom verläuft in der Mitte des Entfeuchtungsraums 2 im wesentlichen senkrecht nach unten und wird in Höhe der Stikkenwägen in die Waagerechte abgelenkt, so daß er quer zur Durchlaufrichtung 13 über die Teiglinge auf den Stikkenwägen 7 streicht und den Teiglingen Feuchtigkeit entzieht.

Des weiteren ist in Fig. 2 der Spindelantrieb mit der Spindel 10 zu erkennen, die von der Halterung 11 gestützt wird und Spindelläufer 21 aufweist, an denen sich um 90° schwenkbare Haken 12 befinden, die an den Stikkenwägen 7 angreifen und diese durch die Aufbereitungsstraße befördern.

Im Entfeuchtungsraum 2 können Stikkenwägen 7' vorzugsweise automatisch vom Spindelantrieb entkoppelt und seitlich, quer zur Durchlaufrichtung 13, verschoben werden. Dies ist z.B. erforderlich, wenn nur zum Gären bestimmte Teiglinge unmittelbar nach dem Gären der Aufbereitungsstraße entnommen werden sollen. Ebenso ist es möglich, Stikkenwägen 7 von außerhalb in den Entfeuchtungsraum 2 einzubringen und an das Transportsystem anzukoppeln, wenn z. B. halbgebackene Brötchen schockgefrostet werden sollen.

Temperatur und Luftfeuchtigkeit sind im Entfeuchtungsraum 2 einstellbar. Vorzugsweise ist dabei die Temperatur im Entfeuchtungsraum 2 niedriger als im Gärraum 1. Die Entfeuchtung der Teiglinge kann bei Bedarf mittels wenigstens eines Verdampfers 15 erfolgen. Darüber hinaus kann die Feuchtigkeitsaufnahmefähigkeit der Luft im Entfeuchtungsraum 2 durch Aufheizen der zu entfeuchtenden Luft mittels eines Heizelements 16 erhöht werden. Vorzugsweise wird das Heizelement 16 in Strömungsrichtung 19 vor dem Verdampfer 15 angeordnet.

Die Teiglinge werden auf Stikkenwägen 7 in Vorschubzyklen durch den Gärraum 1, den Entfeuchtungsraum 2 und den Schockfrostraum 3 befördert. Um diese Beförderung zu ermöglichen, wird als Antrieb für die Stikkenwägen 7 vorzugsweise ein Spindelantrieb 10 verwendet. Dieser Spindelantrieb 10 weist Spindelläufer 21 mit schwenkbaren Haken 12 auf. Dabei kann an jedem der Stikkenwägen 7 wenigstens ein Haken 12 angreifen. Die Stikkenwägen 7 können von dem Spindelantrieb 10 um jeweils eine Vorschublänge befördert werden. Nach der Beförderung der Stikkenwägen 7 um eine Vorschublänge können die Haken 12 um eine Vorschublänge entgegen der Durchlaufrichtung 13 zurückgefahren werden.

Im übrigen ist die Temperatur im Gärraum 1, im Entfeuchtungsraum 2, im Schockfrostraum 3 bzw. im Tiefkühlraum 4 jeweils separat einstellbar und die Luftfeuchtigkeit kann wenigstens im Gärraum 1 und im Entfeuchtungsraum 2 separat eingestellt bzw. geregelt werden.

## Patentansprüche

1. Verfahren zur Herstellung gegärter und gefrosteter Teiglinge, umfassend folgende Schritte:
- Gären von Teiglingen in einem Gärraum (1),
- Entfeuchten der gegärten Teiglinge in einem Entfeuchtungsraum (2), wobei den Teiglingen insbesondere die während des Gärprozesses im Bereich zwischen Krume und Kruste zuviel aufgenommene Feuchtigkeit entzogen wird, um ein späteres Abplatzen der Kruste von der Krume beim fertiggebackenen Teigling weitestgehend zu vermeiden,
- Schockfrosten der entfeuchteten Teiglinge in einem Schockfrostraum (3).

2. Verfahren nach Anspruch 1,
d**adurch gekennzeichnet, dass**
die Entfeuchtung eine möglichst gleichmäßig von außen nach innen, d. h. von der Kruste zur Krume des Teiglings, zunehmende Feuchtigkeitsverteilung erzeugt.

3. Verfahren nach einem der vorhergehenden Ansprüche,
**dadurch gekennzeichnet, dass**
nach dem Entfeuchten die Krume einen Feuchtigkeitsgehalt von 30 bis 80% aufweist, der zur Kruste hin bis auf 18 bis 35% abfällt.

4. Verfahren nach einem der vorhergehenden Ansprüche,
**dadurch gekennzeichnet, dass**
die Entfeuchtung der Teiglinge in einem zirkulierenden Luftstrom erfolgt.

5. Verfahren nach Anspruch 4,
**dadurch gekennzeichnet, dass**
der zirkulierende Luftstrom quer zur Durchlaufrichtung (13) gerichtet ist.

6. Aufbereitungsstraße zur Herstellung gegärter und gefrosteter Teiglinge, mit
- einem Gärraum (1) zum Gären von Teiglingen,
- einem Entfeuchtungsraum (2) zum Entfeuchten der gegärten Teiglinge, in dem den Teiglingen insbesondere die während des Gärens im Bereich zwischen Krume und Kruste zuviel aufgenommene Feuchtigkeit entzogen wird, um ein späteres Abplatzen der Kruste von der Krume bei einem fertiggebackenen Teigling weitestgehend zu vermeiden,
- einem Schockfrostraum (3) zum Schockfrosten der entfeuchteten Teiglinge.

7. Aufbereitsungsstraße nach Anspruch 6,
**dadurch gekennzeichnet, dass**
sich ein Tiefkühlraum (4) an den Schockfrostraum (3) anschließt.

8. Aufbereitungsstraße nach Anspruch 5 oder 6,
**dadurch gekennzeichnet, dass**
im Entfeuchtungsraum (2) ein Verdampfer (15) zur Reduzierung der Luftfeuchtigkeit angeordnet ist.

9. Aufbereitungsstraße nach einem der Ansprüche 6 bis 8,
**dadurch gekennzeichnet, dass**
im Entfeuchtungsraum (2) ein Heizelement (16) angeordnet ist.

10. Aufbereitungsstraße nach einem der Ansprüche 6 bis 9,
**dadurch gekennzeichnet, dass**
Stikkenwägen (7) vorgesehen sind, welche mittels eines Antriebs in Vorschubzyklen durch die Aufbereitungsstraße beförderbar sind.
